# EUROPÄISCHE PATENTSCHRIFT

(11) **EP 0 401 197 B1**
(45) Veröffentlichungstag und Bekanntmachung des Hinweises auf die Patenterteilung: **11.08.1993**
(21) Anmeldenummer: 90890145.7
(22) Anmeldetag: 11.05.1990
(51) Int. Cl.: B23Q 7/10, F16C 41/04, B65G 57/20

(54) **Vorrichtung zum Magazinieren von Kleinteilen**
Device for the storage of hardware
Dispositif pour le magasinage de petit matériel de montage

(30) Priorität: 31.05.1989 AT 1320/89
(43) Veröffentlichungstag der Anmeldung: 05.12.1990
(73) Patentinhaber: INOCON PRODUKTIONSTECHNOLOGIE GESELLSCHAFT M.B.H., 4800 Attnang-Puchheim (AT)
(72) Erfinder: Schwankhart, Gerhard, A-4800 Attnang-Puchheim (AT)
(74) Vertreter: Holzer, Walter, Dipl.-Ing.

(56) Entgegenhaltungen:
- EP-A- 0 215 516
- DD-A- 138 044
- US-A- 1 232 485
- SOVIET INVENTIONS ILLUSTRATED,P,Q Sektionen, Woche 8539, 6. November 1985 DERWENT PUBLICATIONS LTD., London, Seite 29, P 56

## Beschreibung

Die Erfindung betrifft eine Vorrichtung zum Magazinieren von Kleinteilen, insbesondere Rundkörpern, mit einem geneigt angeordneten, in einem Vorrichtungsgestell drehbar gelagerten zylindrischen Gehäuse, das an seiner oberen Stirnseite eine Öffnung zum Einbringen der Kleinteile aufweist, an seiner unteren Stirnseite geschlossen ist und eine wendelförmige Bahn enthält, die sich im Gehäuseinnenraum von der oberen zur unteren Gehäusestirnseite erstreckt, wobei das Gehäuse durch eine zugeordnete Antriebseinrichtung in Drehung versetzbar ist.

Bei der Klassierung von Rundkörpern, die eine Oberflächenfeinheit aufweisen, welche die Rundkörper stoßempfindlich macht, z.B. im Falle von Wälzkörpern für Kugellager, müssen die unterschiedlich klassierten Rundkörper zur Lagerung und zum Transport in Magazine eingebracht werden. Bisher wurden die Rundkörper einfach in Aufnahmemagazine fallen oder rollen gelassen, was beim Aufprall der Körper aufeinander zu Oberflächenbeschädigungen und zu Ausschuß führte.

Aus der DE-B-1,474.925 (nächstliegendes Stand der Technik) ist eine Vorrichtung der einleitend angegebenen Art bekannt, die als Selbstverkäufer für Zuckerwürfel ausgebildet ist. Bei dieser Vorrichtung ist im Gehäuseinneren ein konzentrischer Innenmantel vorgesehen, der mit den Teilen befüllt wird, die über Öffnungen im Innenmantel in den Bereich der an der Außenseite des Innenmantels verlaufenden wendelförmigen Bahn austreten und zur vereinzelten Abgabe zum oberen Gehäuseende wandern. Eine derartige Ausbildung wäre zum Magazinieren von stoßempfindlichen Rundkörpern aus Stahl der vorstehend erläuterten Art völlig ungeeignet, weil die Rundkörper in Schüttgutform in den Innenmantel des Gehäuses gefüllt werden müßten und dabei beschädigt würden. Die bekannte Vorrichtung hätte also die schon erwähnten Nachteile des bisherigen Magazinierens der stoßempfindlichen Rundkörper.

Die Aufgabe der Erfindung besteht darin, eine Vorrichtung der einleitend angegebenen Art zu schaffen, die sich zum Magazinieren von stoßempfindlichen Rundkörpern eignet und jede Beschädigungsgefahr der Körper hintanhält. Die erfindungsgemäße Vorrichtung zeichnet sich dadurch aus, daß sich die wendelförmige Bahn von der Innenseite des zylindrischen Gehäuses nur über einen Teil des Gehäusequerschnittes nach innen erstreckt, daß sich vom Bereich des oberen Gehäuseendes ein Kern nur durch einige Windungen der wendelförmigen Laufbahn hindurch nach unten erstreckt, und daß das Gehäuse mit seinem unteren Ende auswechselbar in einer mit dem Gehäuse drehfest verbunden, am Vorrichtungsgestell schwenkbar gelagerten Buchse steckt, die aus einer Stellung, in welcher sie mit der Drehantriebseinrichtung in Antriebsverbindung steht, in eine Stellung schwenkbar ist, in welcher sie außer Eingriff mit der Antriebseinrichtung steht.

Es sei erwähnt, daß aus der DD-A-138044 ein Speicher und Förderer für rotationssymmetrische Teile, insbesondere Wälzlagerkörper, bekannt ist, der einer anderen Gattung als die Erfindung angehört und ein wendelförmig gebogenes Rohr aufweist, das über Befestigungsarme mit einem Tragkörper verbunden ist, der die Rotationsachse darstellt, wobei die Rohrenden in die Rotationsachse münden. Der Tragkörper ist drehbar gelagert und mit einem Antrieb gekoppelt.

Diese Vorrichtung hat aber kein zylindrisches Gehäuse, das eine wendelförmige Bahn enthält. Die bekannte Konstruktion hat vor allem den Nachteil, daß sie nur für rotationssymmetrische Teile einer bestimmten Abmessung geeignet ist und die Gefahr eines Steckenbleibens der Teile besteht. Der Rohrquerschnitt und der Wickeldurchmesser der Wendel müssen genau auf den Teildurchmesser und die Teillänge abgestimmt sein, was bedeutet, daß für nahezu jede Teilabmessung ein eigenes Magazin erforderlich ist. Es können deshalb nur rotationssymmetrische Teile magaziniert werden, Teile mit anderer Form würden das Magazin sofort verstopfen. Probleme macht bei der bekannten Konstruktion auch die erste Krümmung nach dem zentrischen Einlaufrohr, weil sie zu Betriebsstörungen Anlaß geben kann.

Im Gegensatz zur bekannten Ausführung ermöglicht die erfindungsgemäße Vorrichtung, bei welcher die wendelförmige Bahn gegen das Innere des zylindrischen Gehäuses offen ist, einen großen Freiraum. Durch den kurzen Kern im oberen Wendelbahnabschnitt und die Gehäuseschrägstellung kann bei vorbestimmter Gehäusedrehzahl ein Aufeinanderprallen rasch hintereinander in das Gehäuse fallender Teile absolut vermieden werden. Bei der erfindungsgemäßen Vorrichtung wird jeder Teil aus jeder Rotationsstellung des Gehäuses sofort wegtransportiert. Damit können mit einer hohen Frequenz von z.B. mehr als 8 Teilen pro Sekunde empfindliche Teile schonend magaziniert werden.

Ein weiterer Vorteil des erfindungsgemäßen Magazins besteht darin, daß es auf einfache Weise auswechselbar ist, um als Lager- und Transportbehälter verwendet zu werden. Ferner hat das erfindungsgemäße Magazin bei gleichem Platzbedarf ein wesentlich höheres Füllvolumen als das bekannte Magazin, dessen Austauschbarkeit in mechanischer Hinsicht wesentlich aufwendiger ist.

Gemäß einer Weiterbildung der Erfindung weist die Drehantriebseinrichtung eine endlose Kette auf, die mit der Buchse über ein an dieser montiertes Zahnritzel in Eingriff versetzbar ist, wobei eine Mehrzahl von gleichartigen Buchsen zur Aufnahme je eines Magazines nebeneinander angeordnet und mit der Antriebskette kuppelbar sind.

Gemäß einer bevorzugten Ausführungsform der Erfindung ist der Neigungswinkel der Buchse einstellbar und beträgt vorzugsweise zwischen 30° und 60°.

Die Erfindung ermöglicht eine stoßfreie Magazinierung der Rundkörper, die in jedes Magazin einzeln eingebracht werden und nacheinander auf der wendelförmigen Laufbahn nach unten rollen, wobei das Magazin entgegen der Wendellaufrichtung gedreht wird. Der Neigungswinkel und die Drehzahl der Magazinaufnahmebuchse sind so gewählt, daß die Rundkörper sich unter dem Elevatoreffekt stoßfrei aneinanderreihen und die Magazine von unten nach oben füllen.

Ein Ausführungsbeispiel der Erfindung wird nachfolgend unter Bezugnahme auf die Zeichnungen näher erläutert. Es zeigen:
Fig. 1 eine schematische Ansicht einer Vorrichtung gemäß der Erfindung,
Fig. 2 einen Teillängsschnitt durch eine Magazinhalterung und

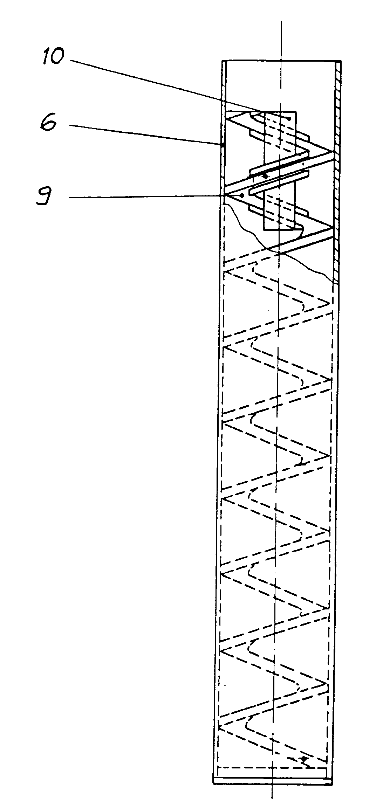

Fig. 3 einen Längsschnitt durch ein Magazin.

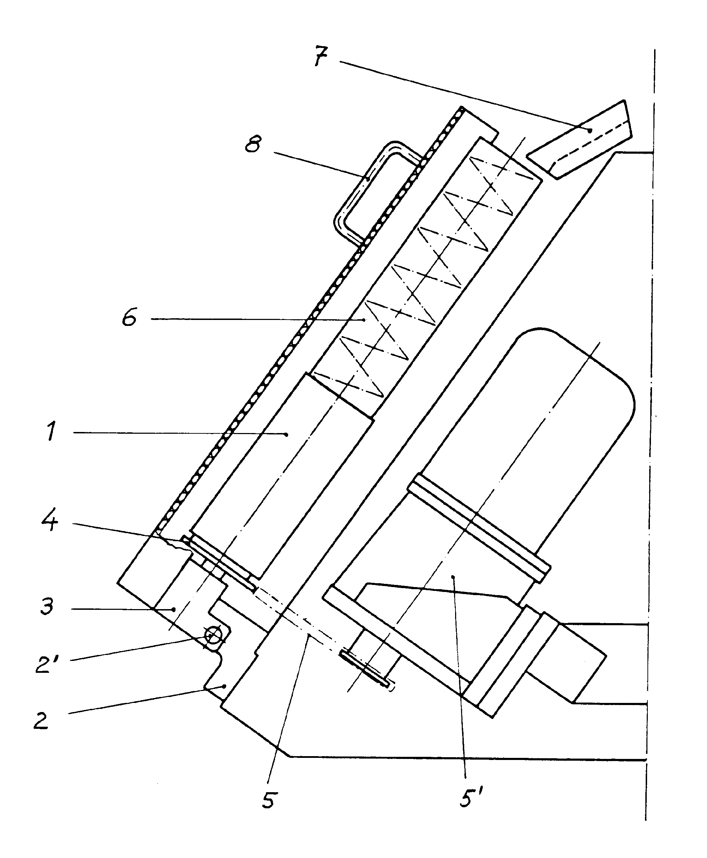

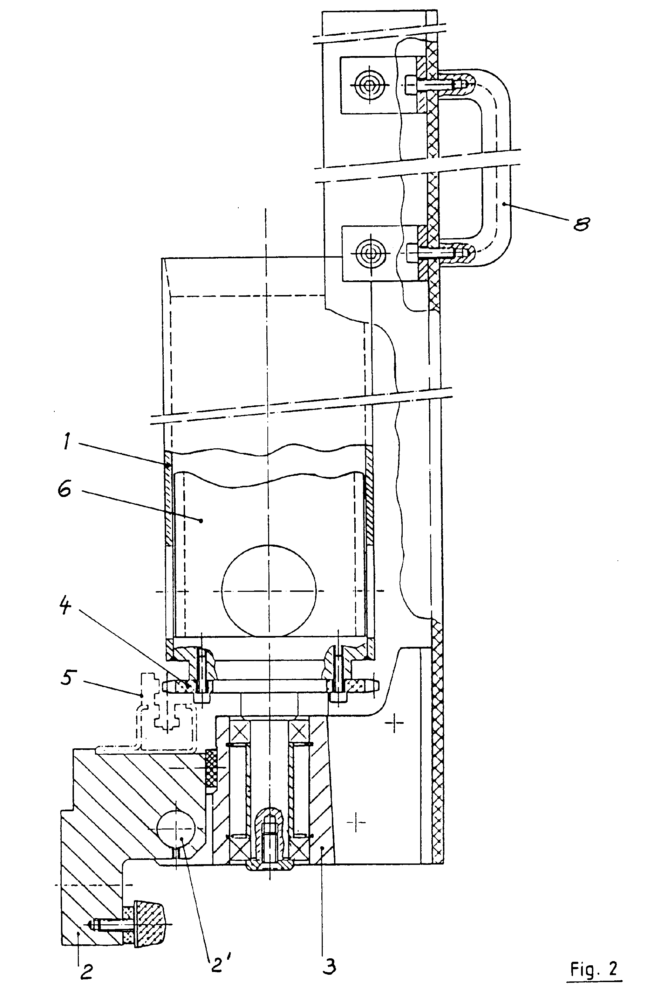

Die Vorrichtung weist eine Reihe von nebeneinander angeordneten zylindrischen Buchsen 1 auf, von denen in Fig. 1 nur eine gezeigt ist und die je in einem Maschinengestell 2, z.B. dem Gestell einer Klassiervorrichtung für Rundkörper über einen Lagerteil 3 drehbar gelagert sind. Der Lagerteil 3 ist seinerseits am Gestell 2 bei 2' schwenkbar gelagert (vgl. Fig. 2) und steht über ein am unteren Ende der Buchse 1 montiertes Zahnritzel 4 mit einer nicht gezeigten endlosen Kette einer in Fig. 2 nur schematisch angedeuteten Antriebseinrichtung 5 mit einem Motor 5' in Drehverbindung. In jede Buchse 1 ist das zylindrische Gehäuse 6 eines Magazins auswechselbar eingesteckt und mit der Buchse über ebenfalls nicht gezeigte Mittel drehfest verbunden. In das offene obere Stirnende des Gehäuses 6 mündet ein Einfüllschnabel 7 od.dgl. für die in das Magazin einzutragenden Rundkörper. Die Buchse 1 ist mittels eines mit dem Lagerteil 3 verbundenen Handgriffes 8 vom Gestell 2 wegschwenkbar, wodurch das Antriebsritzel 4 der Buchse 1 außer Eingriff mit der Antriebseinrichtung 5 kommt.

Wie Fig. 2 zeigt, ist im Inneren des Gehäuses 6 eine Wendel 9 vorgesehen, die sich von der Gehäuseinnenseite nur über einen Teil des Gehäusequerschnittes erstreckt. Die Wendel verläuft vom offenen oberen zum geschlossenen unteren Gehäuseende und bildet eine Laufbahn für die Rundkörper. Im Bereich des oberen Gehäuseendes erstreckt sich ein Kern 10 durch etwa zwei Wendelwindungen nach unten.

Der Neigungswinkel der Buchsen 1 zur Vertikalen ist wählbar bzw. einstellbar und beträgt zweckmäßig zwischen 30° und 60°. Die Neigung der Buchsen 1 und der Steigungs winkel der Laufbahn 9 werden so gewählt, daß die Teile zwischen den Laufbahnwindungen nicht stecken bleiben können.

Im Betrieb der Vorrichtung treten die Rundkörper nacheinander mit gegenseitigem Abstand in das obere Ende des Gehäuses 6 ein und rollen auf der wendelförmigen Laufbahn 9 nach unten. Durch Drehung des Magazins mit Hilfe der Antriebseinrichtung 5 entgegen der Laufrichtung wird ein Elevatoreffekt erzeugt, der eine praktisch stoßfreie Aufnahme bzw. Befüllung des Magazins ermöglicht. Bei Umkehr der Drehrichtung ist demgegenüber eine schonende Entleerung möglich. Nach Erreichen des maximalen Füllstandes wird das Magazin stillgesetzt und nach Ausschwenken der Buchse von der Drehantriebseinrichtung gewechselt.

Die Abmessungen des Magazins werden zweckmäßig den aufzunehmenden Rundkörpern angepaßt.

## Patentansprüche

1. Vorrichtung zum Magazinieren von Kleinteilen, insbesondere Rundkörpern, mit einem geneigt angeordneten, in einem Vorrichtungsgestell (2) drehbar gelagerten zylindrischen Gehäuse (6), das an seiner oberen Stirnseite eine Öffnung zum Einbringen der Kleinteile aufweist, an seiner unteren Stirnseite geschlossen ist und eine wendelförmige Bahn enthält, die sich im Gehäuseinnenraum von der oberen zur unteren Gehäusestirnseite erstreckt, wobei das Gehäuse durch eine zugeordnete Antriebseinrichtung in Drehung versetzbar ist, dadurch gekennzeichnet, daß sich die wendelförmige Bahn (9) von der Innenseite des zylindrischen Gehäuses (6) nur über einen Teil des Gehäusequerschnittes nach innen erstreckt, daß sich vom Bereich des oberen Gehäuseendes ein Kern (10) nur durch einige Windungen der wendelförmigen Laufbahn (9) hindurch nach unten erstreckt, und daß das Gehäuse (6) mit seinem unteren Ende auswechselbar in einer mit dem Gehäuse drehfest verbunden, am Vorrichtungsgestell (2) schwenkbar gelagerten Buchse (1) steckt, die aus einer Stellung, in welcher sie mit der Drehantriebseinrichtung (5) in Antriebsverbindung steht, in eine Stellung schwenkbar ist, in welcher sie außer Eingriff mit der Antriebseinrichtung steht.

2. Vorrichtung nach Anspruch 1, dadurch gekennzeichnet, daß die Drehantriebseinrichtung (5) eine endlose Kette aufweist, die mit der Buchse (1) über ein an dieser montiertes Zahnritzel (4) in Eingriff versetzbar ist, wobei eine Mehrzahl von gleichartigen Buchsen (1) zur Aufnahme je eines Magazines (6) nebeneinander angeordnet und mit der Antriebskette (3) kuppelbar sind.

3. Vorrichtung nach Anspruch 1 oder 2, dadurch gekennzeichnet, daß der Neigungswinkel der Buchse (1) einstellbar ist und vorzugsweise zwischen 30° und 60° zur Vertikalen beträgt.

## Claims

1. Apparatus for storing small parts in a magazine, in particular round bodies, having an inclined cylindrical housing (6) which is rotatably mounted in a frame (2) of the apparatus, has an opening at its top front end for loading the small parts, is closed at its bottom front end and contains a helical track which extends in the interior space of the housing from the top front end to the bottom front end, in which arrangement the housing can be set in rotation by an allocated drive device, characterised in that the helical track (9) extends inwards from the inside of the cylindrical housing (6) only over part of the housing cross-section, in that a core (10) extends downwards from the area of the top housing end only through some turns of the helical track (9), and in that the housing (6) is interchangeably inserted with its bottom end in a bush (1) which is connected to the housing in such a way as to be fixed in terms of rotation, is pivotally mounted on the frame (2) of the apparatus and can be pivoted from a position in which it is in drive connection with the rotary drive device (5) into a position in which it is disengaged from the drive device.

2. Apparatus according to Claim 1, characterised in that the rotary drive device (5) has an endless chain which can be brought into engagement with the bush (1) via a pinion (4) mounted on the latter, in which arrangement a plurality of bushes (1) of the same type for accommodating one magazine (6) each are arranged side by side and can be coupled to the drive chain (3).

3. Apparatus according to Claim 1 or 2, characterised in that the angle of inclination of the bush (1) is adjustable and is preferably between 30° and 60° to the vertical.

## Revendications

1. Dispositif pour le magasinage de petit matériel de montage, en particulier de pièces rondes, comprenant un corps cylindrique (6) monté tournant, incliné dans un bâti (2), qui comporte à son extrémité frontale supérieure une ouverture pour l'introduction du petit matériel, est fermé à son extrémité frontale inférieure et contient une piste en forme d'hélice, qui s'étend à l'intérieur du corps de l'extrémité frontale supérieure à l'extrémité frontale inférieure, le corps pouvant être mis en rotation par un dispositif d'entraînement associé, caractérisé en ce que la piste (9) en forme d'hélice s'étend de la surface intérieure du corps (6) cylindrique en direction de l'intérieur sur seulement une partie de la section du corps, en ce qu'un noyau (10) s'étend vers le bas à partir de la zone de l'extrémité supérieure du corps au travers de quelques spires seulement de la piste (9) en forme d'hélice, et en ce que le corps (6) est monté de manière interchangeable par son extrémité inférieure dans une douille (1) solidaire en rotation du corps montée pivotante sur le bâti (2), qui peut être amenée par pivotement d'une position dans laquelle elle est solidaire en entraînement du dispositif d'entraînement en rotation (5) vers une position dans laquelle elle est désacouplée du dispositif d'entraînement.

2. Dispositif selon la revendication 1, caractérisé en ce que le dispositif d'entraînement en rotation (5) comporte une chaîne sans fin, qui peut être amenée en prise avec la douille (1) au moyen d'un pignon denté (4) monté sur celle-ci, une pluralité de douilles (1) identiques recevant chacune un magasin (6) pouvant être placées côte-à-côte et accouplées à la chaîne d'entraînement (3).

3. Dispositif selon la revendication 1 ou 2, caractérisé en ce que l'angle d'inclinaison de la douille (1) est réglable et est compris de préférence entre 30 et 60° par rapport à la verticale.
